# EUROPÄISCHE PATENTANMELDUNG

(11) **EP 4 810 235 A1**
(43) Veröffentlichungstag der Anmeldung: **23.09.2026**
(21) Anmeldenummer: 26164132.8
(22) Anmeldetag: 11.03.2026
(51) Int. Cl.: B29C 65/18, B29C 65/30, B29C 65/78, B65B 63/02

(54) **SIEGELWERKZEUG, VERPACKUNGSMASCHINE UND VERFAHREN ZUR HERSTELLUNG EINES SIEGELBEUTELS**

(30) Priorität: 18.03.2025 DE 102025110314
(71) Anmelder: OPTIMA life science GmbH, 74523 Schwäbisch Hall (DE)
(72) Erfinder: Müller, Alexander, 74523 Schwäbisch Hall (DE)
(74) Vertreter: Patentanwälte Ruff, Wilhelm, Beier, Dauster & Partner mbB

(57) **Zusammenfassung**

Die Erfindung betrifft ein Siegelwerkzeug, insbesondere zur Herstellung einer Siegelbeutel-Verpackung Verpackung für ein Produkt, wobei das Siegelwerkzeug (1) einen Siegelstempel (10) umfasst, wobei der Siegelstempel (10) an einem Ende eine Siegelnahtkontur (13) aufweist, wobei der Siegelstempel (10) in einer Anpressrichtung einem zu versiegelnden Element zustellbar ist, wobei das Siegelwerkzeug (1) ein Anpresselement (4) umfasst, wobei das Anpresselement mit dem Siegelstempel (10) dem zu versiegelnden Element zustellbar und von dem zu versiegelnden Element weg bewegbar ist, wobei das Anpresselement (4) relativ zu dem Siegelstempel (10) in der Anpressrichtung verstellbar gelagert ist, und wobei auf das Anpresselement (4) eine Kraft wirkt, sodass das Anpresselement (4) eine Hubbewegung ausführt, derart, dass das Anpresselement (4) bei einem Zustellen des Siegelstempels (10) vor der Siegelnahtkontur (13) auf dem zu versiegelnden Element aufsetzt und/oder bei einem Bewegen des Siegelstempels (10) weg von dem zu versiegelnden Element nach der Siegelnahtkontur (13) von dem zu versiegelnden Element abhebt. Die Erfindung betrifft weiter eine Verpackungsmaschine und Verfahren zur Herstellung einer Siegelbeutel-Verpackung.

## Beschreibung

### ANWENDUNGSGEBIET UND STAND DER TECHNIK

Die Erfindung betrifft ein Siegelwerkzeug, insbesondere zur Herstellung einer Siegelbeutel-Verpackung. Die Erfindung betrifft weiter eine Verpackungsmaschine und Verfahren zur Herstellung einer Siegelbeutel-Verpackung.

Als "Siegeln" wird hier ein Verbinden von Lagen eines Packmittels entlang einer Siegelnaht, insbesondere unter Einwirkung höherer Temperaturen und/oder unter Druck, bezeichnet. In Anwendungsfällen handelt es sich bei den Lagen um Folien aus einem Monomaterial, beispielsweise Polypropylen oder Polyethylen. In Anwendungsfällen handelt es sich bei einer oder beiden Lagen um eine mehrschichtige Folie, insbesondere eine Folie umfassend einen Trägerstoff und mindestens eine Beschichtung, insbesondere eine thermoplastische Beschichtung, welche zum Verbinden der Folien aufgeschmolzen wird. Der Trägerstoff ist beispielsweise ein faserbasierter Trägerstoff und/oder Aluminium und wird beim Verbinden der Lagen in Ausgestaltungen nicht aufgeschmolzen. In Ausgestaltungen weist eine der Lagen keine beim Versiegeln aufgeschmolzene Beschichtung auf. Lagen ohne Beschichtung, Lagen aus Monomaterial sowie mehrschichtige Lagen werden hier einheitlich als Lagen aus Packmittel oder Packmittellagen bezeichnet. Ein Werkzeug zum Versiegeln zweier Packmittellagen wird als Siegelwerkzeug bezeichnet.

Als Siegelbeutel-Verpackung wird eine Verpackung bezeichnet, bei welcher ein Produkt zwischen zwei miteinander entlang einer Siegelnaht verbundenen Packmittellagen eingeschlossen wird. Die Siegelnaht ist insbesondere geschlossen umlaufend, um das Produkt fluiddicht in dem Siegelbeutel einzuschließen.

### AUFGABE UND LÖSUNG

Es sind Aufgaben der Erfindung, ein verbessertes Siegelwerkzeug, insbesondere zur Herstellung einer Siegelbeutel-Verpackung, sowie eine Verpackungsmaschine umfassend ein Siegelwerkzeug zu schaffen. Es ist eine weitere Aufgabe der Erfindung, ein verbessertes Verfahren zur Herstellung einer Siegelbeutel-Verpackung zu schaffen.

Diese Aufgaben werden gelöst durch die Gegenstände mit den Merkmalen der Ansprüche 1, 10 und 11. Vorteilhafte Ausgestaltungen ergeben sich aus den Unteransprüchen und der nachfolgenden Beschreibung.

Gemäß einem ersten Aspekt wird ein Siegelwerkzeug geschaffen, insbesondere zur Herstellung einer Siegelbeutel-Verpackung für ein Produkt.

Das Siegelwerkzeug umfasst einen Siegelstempel, der an einem Ende eine Siegelnahtkontur aufweist und in einer Anpressrichtung einem zu versiegelnden Element zustellbar ist. Nach erfolgtem Versiegeln ist der Siegelstempel entgegen der Anpressrichtung wieder abhebbar.

Das Siegelwerkzeug umfasst ein Anpresselement, wobei das Anpresselement mit dem Siegelstempel dem zu versiegelnden Element zustellbar und von dem zu versiegelnden Element weg bewegbar ist.

Das Anpresselement ist relativ zu dem Siegelstempel in der Anpressrichtung verstellbar gelagert. Das Siegelwerkzeug ist eingerichtet, sodass auf das Anpresselement eine Kraft wirkt, sodass das Anpresselement eine Hubbewegung ausführt, derart, dass das Anpresselement bei einem Zustellen des Siegelstempels vor der Siegelnahtkontur auf dem zu versiegelnden Element aufsetzt und/oder bei einem Bewegen des Siegelstempels weg von dem zu versiegelnden Element nach der Siegelnahtkontur von dem zu versiegelnden Element abhebt.

Das Anpresselement ist als Anpressrahmen mit einer innerhalb der Siegelnahtkontur angeordneten Anpresskontur gestaltet.

Das Siegelwerkzeug umfasst eine Kühleinrichtung zum Kühlen des Anpresselements und ein innerhalb der Siegelnahtkontur und in dem Anpressrahmen angeordnetes Druckpolster.

Die Begriffe "ein", "eine", "einer" etc. werden im Zusammenhang mit der Anmeldung lediglich als unbestimmte Artikel und nicht als Zählwörter verwendet.

In Ausgestaltungen sind mehrere Anpresselemente vorgesehen, welche relativ zu dem Siegelstempel verstellbar sind

Insbesondere handelt es sich bei dem zu versiegelnden Element um eine Siegelbeutel-Verpackung mit zwei Packmittellagen, welche entlang einer Siegelnaht miteinander zu verbinden sind. In Ausgestaltungen sind die Packmittellagen der Siegelbeutel-Verpackung entlang exakt einer Siegelnaht verbunden. In Ausgestaltungen sind die Packmittellagen der Siegelbeutel-Verpackung entlang mehrere Siegelnähte verbunden. In Ausgestaltungen können die beiden Packmittellagen schlauchartig miteinander verbunden sein und durch das Verbinden an zwei Siegelnähten ein Siegelbeutel geschaffen werden.

Das zu versiegelnde Element weist mindestens eine Siegelschicht auf, welche beim Versiegeln durch den Siegelstempel aktivierbar ist. Insbesondere weist das zu versiegelnde Element eine Siegelschicht für ein Heißversiegeln auf, welche durch ein Erwärmen des Siegelstempels aktivierbar ist. Das Siegelwerkzeug weist in Ausgestaltungen eine Heizeinrichtung auf, wobei zumindest die Siegelnahtkontur des Siegelstempels durch die Heizeinrichtung zum Aktivieren der Siegelschicht erwärmbar ist.

Die Siegelschicht einer Siegelbeutel-Verpackung ist je nach Anwendungsfall gleich der Packmittellage oder eine Beschichtung an mindestens einer Packmittellage.

Durch ein zeitversetztes Abheben des Anpresselements relativ zu dem Siegelstempel wird in Ausgestaltungen bewirkt, dass eine zum Versiegeln durch Temperatur und/oder Druck aufgeweichte Siegelschicht beim Anheben des Anpresselements bereits verfestigt ist. Dadurch wird ein Lösen der Verbindung an einer beim Anheben des Siegelstempels noch nicht oder noch nicht vollständig gefestigten Siegelschicht verhindert.

Bei dem Produkt handelt es sich in Ausgestaltungen um ein als dreidimensionales Produkt bezeichnetes Produkt, welches eine sich zwischen den Packmittellagen erstreckende Höhe aufweist. Als dreidimensionale Produkte werden Produkte bezeichnet, welche quer, insbesondere senkrecht zu einer Ebene der Siegelnaht eine Höhe aufweisen, welche eine Wölbung und/oder Streckung mindestens einer Packmittellage bewirken, sodass die Packmittellage an der Siegelnaht um einen Winkel umgelenkt wird, insbesondere um einen Winkel größer 5°, weiter insbesondere um einen Winkel größer 15°.

Bei dem dreidimensionalen Produkt handelt es sich in Ausgestaltungen um ein medizinisches Produkt, wie beispielsweise eine mehrlagige Wundauflage. Die Erfindung ist jedoch nicht auf die Verwendung für medizinische Produkte beschränkt.

Die Höhe des dreidimensionalen Produkts bewirkt, dass beim Einbringen des Produkts und Versiegeln der Packmittellagen mindestens eine Packmittellage an der Siegelnaht durch das Produkt unter Spannung gesetzt wird. Durch das Anpresselement wird eine Entlastung der Siegelnaht vor, bei oder nach dem Versiegeln durch den Siegelstempel bewirkt.

Die Anpresskontur erstreckt sich innenliegend der Siegelnahtkontur. Durch die innenliegende Anpresskontur ist insbesondere vermeidbar, dass beim Anheben des Siegelstempels auf die Siegelnaht Zugkräfte aufgrund einer Wölbung und/oder Verformung der Packmittellage durch ein eingeschlossenes Produkt einwirken.

In Ausgestaltungen ist vorgesehen, dass die Anpresskontur des Anpressrahmens sich zumindest abschnittsweise entlang der Siegelnahtkontur erstreckt, insbesondere im Wesentlichen parallel zu dieser. Die Anpresskontur ist in Ausgestaltungen ununterbrochen umlaufend. Die Anpresskontur ist in Ausgestaltungen unterbrochen, um ein Austreten von Gas aus einem Bereich innerhalb der Anpresskontur nach einem Aufsetzen der Anpresskontur auf das zu versiegelnde Element zu erlauben.

In Ausgestaltungen ist ein weiteres Anpresselement mit einer Anpresskontur vorgesehen, wobei sich die Anpresskontur des weiteren Anpresselements außenliegend der Siegelnahtkontur erstreckt.

In Ausgestaltungen ist das Anpresselement gegenüber dem Siegelstempel wärmeisoliert, um ein Aufheizen des Anpresselements zu vermeiden.

Die Kühleinrichtung ist je nach Anwendungsfall geeignet gestaltbar, um insbesondere ein Aufheizen des Anpresselements, insbesondere zumindest in einem das zu versiegelnde Element berührenden Bereich, auf eine Schmelztemperatur des zu versiegelnden Elements zu vermeiden. Dadurch wird insbesondere bei einem Heißsiegeln verhindert, dass durch das Anpresselement eine Siegelschicht aktiviert wird.

Die Kühleinrichtung ist in Ausgestaltungen als Flüssigkeitskühlung umfassend an den Anpresselement vorgesehene Kühlkanäle gestaltet. In Ausgestaltungen umfasst die Kühleinrichtung Peltier-Elemente. Die Peltier-Elemente sind in Ausgestaltungen an passiven Kühlkörpern montiert, wobei die Kühlkörper Kühlrippen aufweisen, die außerhalb des Siegelstempels angeordnet sind. Dadurch wird verhindert, dass die Kühlrippen durch den Siegelstempel aufgewärmt werden.

In Ausgestaltungen wird das Anpresselement aufgrund der Schwerkraft relativ zu dem Siegelstempel in eine Position bewegt, in welcher ein freies Ende des Anpresselements in der Anpressrichtung von der Siegelnahtkontur in Richtung des zu versiegelnden Elements abragt. Dadurch wird bewirkt, dass das Anpresselement bei einem Zustellen des Siegelstempels vor der Siegelnahtkontur auf dem zu versiegelnden Element aufsetzt und/oder bei einem Bewegen des Siegelstempels weg von dem zu versiegelnden Element nach der Siegelnahtkontur von dem zu versiegelnden Element abhebt. In Ausgestaltungen ist eine Krafteinrichtung vorgesehen, durch welche alternativ oder ergänzend zu der Schwerkraft eine Kraft auf das Anpresselement aufbringbar ist, insbesondere um das Anpresselement in eine Position zu zwingen, in welcher ein freies Ende des Anpresselements in der Anpressrichtung von der Siegelnahtkontur in Richtung des zu versiegelnden Elements abragt.

Die Krafteinrichtung ist in Ausgestaltungen als passive Krafteinrichtung, insbesondere als Federelement, insbesondere mehrere Federelemente, gestaltet. Passiv meint hierbei, dass die Krafteinrichtung über keine eigenen Aktuatoren verfügt. In Ausgestaltungen ist das Federelement oder sind die Federelemente derart zwischen dem Siegelstempel und dem Anpresselement angeordnet, dass durch das oder die Federelement(e) das Anpresselement in eine Position gezwungen ist, in welcher ein freies Ende des Anpresselement in Richtung des zu versiegelnden Elements von dem Siegelstempel abragt. In Ausgestaltungen ist das Anpresselement an dem Siegelstempel gelagert, wobei durch die Hubbewegung des Siegelstempels auch das Anpresselement mit hubbewegt wird und das von der Siegelnahtkontur abragende freie Ende des Anpresselements vor der Siegelnahtkontur auf dem zu versiegelnden Element aufsetzt. Die Hubbewegung des Siegelstempels wird fortgesetzt, sodass die Siegelnahtkontur zum Versiegeln in Kontakt mit dem zu versiegelnden Element gelangt. Bei fortgeführter Hubbewegung des Siegelstempels nach einem Aufsetzen des Anpresselements wird das Federelement bzw. werden die Federelemente gespannt und bewirkt/bewirken eine Druckkraft und eine Anpressung der Anpresskontur auf das zu versiegelnde Element. Der Siegelstempel wird nach einer anwendungsfallabhängigen Zeit weg von dem zu versiegelnden Element angehoben, wobei das gespannte Federelement / die gespannten Federelemente das Anpresselement weiter in Richtung des zu versiegelnden Elements zwingen. Nach Erreichen eines maximalen Verstellwegs zwischen dem Siegelstempel und dem Anpresselement wird das an dem Siegelstempel gelagerte Anpresselement mit dem Siegelstempel weg von Element bewegt.

Die Krafteinrichtung ist in Ausgestaltungen als aktive Krafteinrichtung gestaltet, insbesondere als hydraulischer, pneumatischer, elektromagnetischer oder als linear wirkender elektrischer Antrieb ausgebildet ist, um das Anpresselement an das zu versiegelnde Element zu zwingen. Aktiv meint hierbei, dass die Krafteinrichtung über mindestens einen eigenen Aktuator verfügt.

In Ausgestaltungen ist das Druckpolster ein flexibler und/oder kompressibler, innerhalb der Siegelnahtkontur angeordneter Einsatz. Das Druckpolster wirkt insbesondere mit einem kompressiblen Produkt zusammen, um bei Zustellen des Siegelstempels und/oder des Anpresselements das Produkt zu komprimieren und um insbesondere ein vorhandenes Gas, insbesondere Luft, aus dem Produkt und/oder zwischen den Packmittellagen zu entfernen. Dadurch sind in Ausgestaltungen eine Größe des verpackten Produkts und/oder auf die Siegelnaht wirkende Kräfte reduzierbar. Eine reduzierte Menge an Luft in der Siegelbeutel-Verpackung ist in Anwendungen zudem vorteilhaft, da weniger Sauerstoff und Feuchtigkeit in der geschlossenen Siegelbeutel-Verpackung zurückbleiben.

Das Druckpolster ist in dem Anpressrahmen angeordnet ist. Durch Anordnung in dem Anpressrahmen kann ein Erwärmen des Druckpolsters durch den Siegelstempel verhindert werden.

In Ausgestaltungen ist das Anpresselement an dem Siegelstempel in Anpressrichtung verstellbar gelagert. Das Anpresselement ist dabei mit dem Siegelstempel in Anpressrichtung bewegbar, insbesondere durch eine auf den Siegelstempel einwirkende Stelleinrichtung. Das Anpresselement ist weiter relativ zu dem Siegelstempel durch die Krafteinrichtung verstellbar, um ein zeitversetztes Aufsetzen und/oder Anheben des Anpresselements und des Siegelstempels zu bewirken.

In Ausgestaltungen weist das Siegelwerkzeug einen Träger auf, wobei das Anpresselement an dem Träger gelagert ist. Im Unterschied zur vorgenannten Ausgestaltungsvariante liegt keine unmittelbare mechanische Kopplung von Siegelwerkzeug und Anpresselement vor. In Ausgestaltungen ist der Träger hubbewegt und insbesondere relativ zum Siegelwerkzeug feststehend. In anderen Ausgestaltungen ist der Träger feststehend, wobei das Siegelwerkzeug und das Anpresselement jeweils in Anpressrichtung verstellbar and dem Träger gelagert sind. Bei der Gestaltung mit einem Träger muss eine auf das Anpresselement aufzubringende Kraft, insbesondere durch eine Krafteinrichtung aufzubringende Kraft, nicht durch den Siegelstempel mitübernommen werden. Eine Kraftmessung an dem Siegelstempel wird so nicht durch auf das Anpresselement wirkende Kräfte verfälscht.

Das Siegelwerkzeug umfasst in Ausgestaltungen weiter ein mit dem Siegelstempel zusammenwirkendes Gegenelement, insbesondere eine Ambossplatte oder einen zweiten Siegelstempel. An dem zweiten Siegelstempel ist in Ausgestaltungen ebenfalls ein Anpresselement angeordnet.

Gemäß einem zweiten Aspekt wird eine Verpackungsmaschine zur Herstellung einer Siegelbeutel-Verpackung für ein Produkt, insbesondere ein dreidimensionales Produkt, geschaffen. Die Siegelbeutel-Verpackung umfasst eine erste Packmittellage und eine zweite Packmittellage. Bei dem Produkt handelt es sich insbesondere um ein dreidimensionales Produkt.

Die Verpackungsmaschine ist eingerichtet, um das Produkt zwischen den zwei Packmittellagen einzubringen. Die Verpackungsmaschine umfasst ein Siegelwerkzeug mit einem Siegelstempel und einem Anpresselement, um die Packmittellagen entlang einer Siegelnaht miteinander zu versiegeln.

Die Verpackungsmaschine ist insbesondere für eine bahnförmige Verarbeitung eingerichtet, wobei bahnförmig bereitgestellte Packmittellagen mit dazwischen angeordneten Produkten dem Siegelwerkzeug zugeführt werden. Die Produkte sind für eine gleichmäßig getakteten Betrieb insbesondere in regelmäßigen Abständen zwischen den Packmittellagen angeordnet.

Gemäß einem dritten Aspekt wird ein Verfahren zur Herstellung einer Siegelbeutel-Verpackung umfassend erste Packmittellage und eine zweite Packmittellage für ein Produkt beschrieben. Das Produkt wird zwischen den zwei Packmittellagen eingebracht und die Packmittellagen werden entlang einer Siegelnaht miteinander versiegelt. Zum Versiegeln wird ein Siegelstempel in einer Anpressrichtung den Packmittellagen zugestellt, sodass eine Siegelnahtkontur des Siegelstempels auf der dem Siegelstempel zugewandten ersten Packmittellage aufsetzt.

Ein Anpresselement wird mit dem Siegelstempel den Packmittellagen zugestellt wird und setzt auf der dem Siegelstempel zugewandten ersten Packmittellage auf.

Das Anpresselement wird dabei zumindest teilweise zeitversetzt zu dem Siegelstempel bewegt, sodass bei einem Zustellen des Siegelstempels das Anpresselement vor der Siegelnahtkontur auf der ersten Packmittellage aufsetzt und/oder bei einem Bewegen des Siegelstempels weg von den Packmittellagen das Anpresselement nach der Siegelnahtkontur von der ersten Packmittellage abhebt.

Das Anpresselement wird gekühlt, um ein Erhitzen der Packmittellagen durch das Anpresselement zu vermeiden.

Das Produkt wird beim und/oder vor einem Versiegeln der Packmittellagen entlang der Siegelnaht durch ein innerhalb der Siegelnahtkontur angeordnetes Druckpolster komprimiert.

Die Begriffe "erster", "zweiter", etc. dienen im Zusammenhang mit der Anmeldung lediglich zur Unterscheidung und geben keine Reihenfolge an.

Ein Verbinden der Packmittellagen erfolgt insbesondere durch ein Heißversiegeln. Der Siegelstempel wird zum Aufschmelzen einer oder beider Packmittellagen und/oder einer Beschichtung an mindestens einer Packmittellage erwärmt. Ein Zeitversatz beim Abheben wird insbesondere so gewählt, dass das Anpresselement erst nach einem Verfestigen der aufgeschmolzenen Packmittelage(n) und/oder der aufgeschmolzenen Beschichtung erfolgt.

Das Anpresselement wird gekühlt, um ein Aufschmelzen einer Siegelschicht durch das Anpresselement zu vermeiden. Ein Kühlen des Anpresselements erfolgt je nach Anwendungsfall auf eine geeignete Temperatur, um ein Aufschmelzen der Siegelschicht, insbesondere durch den Kontakt mit dem Anpresselement, zu vermeiden.

In Ausgestaltungen ist vorgesehen, dass das Anpresselement bei einem Abheben der Siegelnahtkontur für eine Anpressdauer und/oder bis Erreichen eines maximalen Verstellwegs zwischen dem Siegelstempel und dem Anpresselement an die erste Packmittellage gezwungen wird. Ein Zwingen des Anpresselements an die Packmittellage erfolgt insbesondere durch eine aktive und/oder passive Krafteinrichtung. Eine Kraft, mit welcher das Anpresselement an die erste Packmittellage gezwungen wird, ist je nach Anwendungsfall geeignet wählbar. In Ausgestaltungen ist beispielsweise das Anpresselement an dem Siegelstempel in Anpressrichtung verstellbar gelagert, wobei bei einer Bewegung des Siegelstempels weg von der ersten Packmittellage nach Erreichen des maximalen Verstellwegs zwischen dem Siegelstempel und dem Anpresselement das Anpresselement mit dem Siegelstempel bewegt und von der Packmittellage angehoben wird. In Ausgestaltungen sind das Anpresselement und der Siegelstempel nicht unmittelbare miteinander gekoppelt, wobei beispielsweise bei einer Bewegung des Siegelstempels weg von der Packmittellage das Anpresselement für eine je nach Anwendungsfall geeignet festlegbare Anpressdauer an die Packmittellage gezwungen wird.

Das Produkt wird beim und/oder vor einem Versiegeln der Packmittellagen entlang der Siegelnaht durch ein innerhalb der Siegelnahtkontur angeordnetes Druckpolster komprimiert. Bevorzugt beginnt die Komprimierung, bevor die Siegelnahtkontur auf der ersten Packmittellage aufsetzt. Bei dem Druckpolster handelt es sich insbesondere um einen flexiblen und/oder kompressiblen Einsatz, durch den ein Gas, insbesondere Luft, aus der Siegelbeutel-Verpackung herausdrückt wird. Durch die Kompression des Produkts können Spannungen im Bereich der Siegelnaht beim Verbinden reduziert werden. Das Druckpolster ist innerhalb der Anpresskontur an dem Anpresselement angeordnet, sodass es sich nicht auf die Temperatur des Siegelstempels aufheizt. Dadurch wird ein Aufschmelzen einer Siegelschicht im Bereich des Druckpolsters vermieden.

Die vorstehend und nachstehend beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar. Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### KURZBESCHREIBUNG DER ZEICHNUNGEN

Ausführungsbeispiele der Erfindung sind nachfolgend anhand der Figuren erläutert. Für gleiche oder ähnliche Bauteile werden in den Figuren übereinstimmende Bezugszeichen verwenden.

Dabei zeigen:
- Fig. 1: eine geschnittene Seitenansicht eines Ausführungsbeispiels eines Siegelwerkzeugs zur Herstellung einer Siegelbeutel-Verpackung;
- Fig. 2: eine teilweise geschnittene Draufsicht auf das Siegelwerkzeug 1 gemäß Fig. 1;
- Fig. 3: eine geschnittene Seitenansicht eines Ausführungsbeispiels eines Siegelwerkzeugs zur Herstellung einer Siegelbeutel-Verpackung ähnlich Fig. 1;
- Fig. 4: eine teilweise geschnittene Draufsicht auf das Siegelwerkzeug 1 gemäß Fig. 3 und
- Fig. 5: eine geschnittene Seitenansicht eines Ausführungsbeispiels eines Siegelwerkzeugs zur Herstellung einer Siegelbeutel-Verpackung ähnlich Fig. 1.

### DETAILLIERTE BESCHREIBUNG DER AUSFÜHRUNGSBEISPIELE

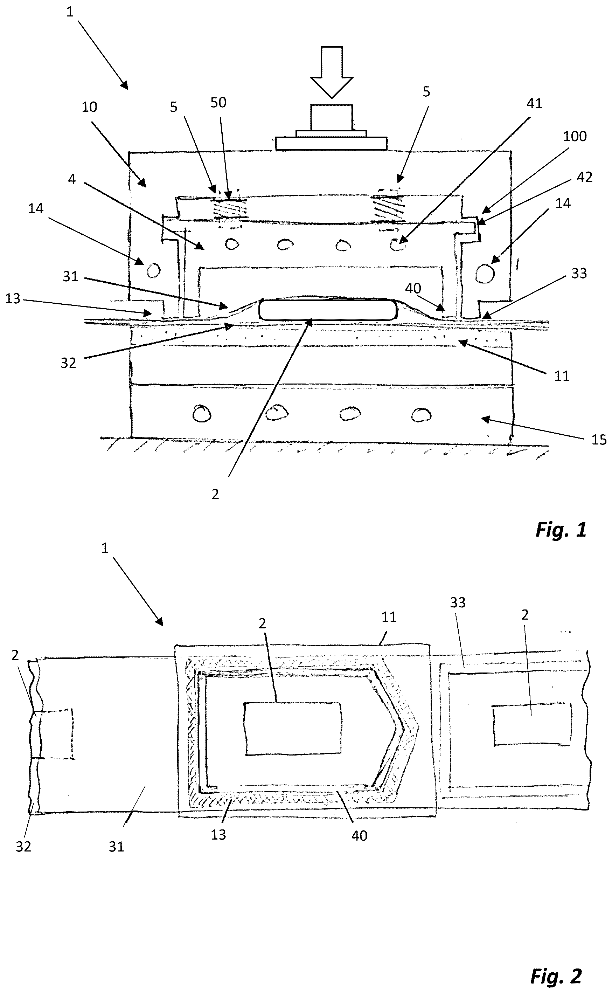

Fig. 1 und 2 zeigen in einer geschnittenen Seitenansicht und einer teilweise geschnittenen Draufsicht ein Ausführungsbeispiel eines Siegelwerkzeugs 1 zur Herstellung einer Siegelbeutel-Verpackung für ein Produkt 2.

Zur Herstellung der Siegelbeutel-Verpackung für das Produkt 2 werden zwei Packmittellagen 31 32 miteinander entlang einer Siegelnaht 33 versiegelt und das Produkt 2 wird innerhalb der Siegelnaht 33 zwischen den zwei Packmittellagen 31, 32 eingeschlossen.

Ein Versiegeln der Packmittellagen 31, 32 erfolgt durch ein Siegelwerkzeug 1 umfassend einen Siegelstempel 10. Die Packmittellagen 31, 32 sind durch den Siegelstempel 10 entlang einer Siegelnaht 33 mit Druck und/oder Temperatur beaufschlagbar, sodass die Packmittellagen 31, 32 und/oder eine an zumindest einer Packmittellage 31, 32 vorhandene Beschichtung entlang der Siegelnaht 33 aufschmilzt und beim anschließenden Verfestigen die Packmittellagen 31, 32 entlang der Siegelnaht 33 miteinander verbunden sind.

Das dargestellte Siegelwerkzeug 1 umfasst den Siegelstempel 10 und eine Ambossplatte 11. Der Siegelstempel 10 ist in einer durch einen Pfeil dargestellten Anpressrichtung verstellbar gelagert und wird der Ambossplatte 11 zum Versiegeln der Packmittellagen 31, 32 zugestellt. Der Siegelstempel 10 weist an einer der Ambossplatte 11 zugewandten Seite eine Siegelnahtkontur 13 auf. Die Siegelnahtkontur 13 ist insbesondere umlaufend geschlossen. Der dargestellte Siegelstempel 10 umfasst Heizelemente 14, durch welche der Siegelstempel 10 zumindest im Bereich der Siegelnahtkontur 13 aufgeheizt werden kann. An einer von dem Siegelstempel 10 abgewandten Seite der Ambossplatte 11 ist in dem dargestellten Ausführungsbeispiel eine Kühleinrichtung 15 zum Abführen der durch den Siegelstempel 10 auf die Ambossplatte 11 aufgebrachten Wärme vorgesehen.

Das Siegelwerkzeug 1 umfasst weiter ein Anpresselement 4 auf. Das dargestellte Anpresselement 4 ist als Anpressrahmen gestaltet und weist eine Anpresskontur 40 auf. Die Anpresskontur 40 erstreckt sich zumindest abschnittsweise entlang der Siegelnahtkontur 13. In Ausgestaltungen ist die Anpresskontur 40 wie in Fig. 1 und 2 dargestellt an einer Innenseite der Siegelnahtkontur 13 angeordnet. In anderen Ausgestaltungen ist die Anpresskontur 40 an einer Außenseite der Siegelnahtkontur 13 angeordnet. In Ausgestaltungen ist die Anpresskontur 40 umlaufend. In anderen Ausgestaltungen ist die Anpresskontur 40 entlang des Umfangs unterbrochen.

Das Anpresselement 4 ist insbesondere gekühlt. In dem dargestellten Ausführungsbeispiel weist das Anpresselement 4 Kühlkanäle 41 auf, durch welche eine Kühlflüssigkeit geführt werden kann. In Ausgestaltungen erfolgt eine Kühlung alternativ oder zusätzlich durch Peltier-Elemente.

Das Anpresselement 4 ist relativ zu dem Siegelstempel 10 in der Anpressrichtung verstellbar, sodass das Anpresselement 4 auf Anlage mit der ersten Packmittellage 31 gebracht werden kann, bevor der Siegelstempel 10 auf Anlage mit der ersten Packmittellage 31 gelangt und/oder auf Anlage mit der ersten Packmittellage 31 verbleiben kann, wenn der Siegelstempel 10 in Richtung weg der Ambossplatte 11 bewegt wird.

Das Anpresselement 4 ist in dem in Fig. 1 dargestellten Ausführungsbeispiel in der Anpressrichtung verstellbar an dem Siegelstempel 10 gelagert. Das Anpresselement 4 ist relativ zu dem Siegelstempel 10 in eine erste Position bewegbar, in welcher ein die Anpresskontur 40 aufweisendes Ende des Anpresselements 4 in der Anpressrichtung von dem Siegelstempel 10 abragt. Das Anpresselement 4 ist in Ausgestaltungen relativ zu dem Siegelstempel 10 in eine zweite Position bewegbar, in welcher das die Anpresskontur 40 aufweisende Ende des Anpresselements 4 in der Anpressrichtung nicht von dem Siegelstempel 10 abragt. In Ausgestaltungen ist die Anpresskontur 40 in der zweiten Position in einer Ebene mit der Siegelnahtkontur 13 angeordnet.

Für eine verstellbare Lagerung des Anpressrahmens 4 an dem Siegelstempel 10 sind in dem dargestellten Ausführungsbeispiel an dem Siegelstempel 10 sich in Anpressrichtung erstreckende Führungsstangen 5 vorgesehen, an welchen der Anpressrahmen 4 verstellbar geführt ist.

Das Anpresselement 4 ist mit einer Kraft beaufschlagt, welche das Anpresselement 4 in die erste Position oder in Richtung der ersten Position relativ zu dem Siegelstempel 10 bewegt wird. In dem dargestellten Ausführungsbeispiel ist die Anpressrichtung zumindest im Wesentlichen vertikal und das Anpresselement 4 wird aufgrund der Schwerkraft in die erste Position bewegt. Ergänzend ist in dem in Fig. 1 dargestellten Ausführungsbeispiel eine Krafteinrichtung vorgesehen, wobei das Anpresselement 4 mit der Krafteinrichtung in Richtung der ersten Position gezwungen wird. In Ausgestaltungen weist das Anpresselement 4 eine kleine Masse auf, um für eine Hubbewegung des Siegelstempels 10 mit dem daran gelagerten Anpresselement 4 aufzubringende Stellkräfte klein zu halten. Eine Kraft, durch welche das Anpresselement 4 in die erste Position bewegt wird, wird in Ausgestaltungen mindestens hälftig, insbesondere zu mehr als 75% durch die Krafteinrichtung aufgebracht.

In dem dargestellten Ausführungsbeispiel sind Federelemente 50 vorgesehen, welche den Anpressrahmen 4 in Richtung der ersten Position zwingen. Beim Absenken des Siegelstempels 10 in Richtung der Ambossplatte 11 wird der Anpressrahmen 4 durch Kontakt mit der Packmittellage 31 und die durch die Ambossplatte aufgebrachte Gegenkraft das Anpresselement 4 aus der ersten Position in Richtung der zweiten Position gezwungen. Dabei werden die Federelemente 50 gespannt und bewirken eine Anpresskraft.

In Ausgestaltungen ist anstelle oder zusätzlich zu einer passiven Krafteinrichtung umfassend Federelemente eine aktive Krafteinrichtung vorgesehen, umfassend beispielsweise einen hydraulischen, pneumatischen, elektromagnetischen oder als linear wirkenden elektrischen Antrieb.

**In** dem dargestellten Ausführungsbeispiel weist der Siegelstempel 10 eine Nut 100 auf, in welcher ein an dem Anpresselement 4 vorgesehener Flansch 42 aufgenommen ist. Wände der Nut 100 wirken mit dem Flansch 42 zusammen, um eine Bewegung des Anpresselements 4 relativ zu dem Siegelstempel 10 zu begrenzen. Eine Höhe der Nut 100 in Anpressrichtung ist in Ausgestaltungen derart gewählt, dass in der in Fig. 1 dargestellten Siegelposition unter Aufbringen einer Gegenkraft durch die Ambossplatte 11 der Flansch 42 die Nut 100 nicht berührt, um ein Aufheizen des Anpresselements 4 durch Kontakt mit dem Siegelstempel 10 zu vermeiden und um die Hubbewegung des Siegelwerkzeugs 10 nicht zu limitieren.

**In** Ausgestaltungen weist das Anpresselement 4 an seinen dem Siegelstempel 10 zugewandten Flächen eine Wärmeisolierung, beispielsweise in Form einer Beschichtung, auf.

Zum Verpacken des Produkts 2 werden die Packmittellagen 31, 32 durch das Siegelwerkzeug 1 entlang Siegelnahtkontor 13 miteinander verbunden.

**In** Ausgestaltungen werden die Packmittellagen 31, 32 als Bahnen bereitgestellt. Die Packmittellagen 31, 32 werden dem Siegelwerkzeug 1 zugeführt, wobei zwischen den Bahnen in regelmäßigen oder unregelmäßigen Abständen Produkte 2 eingelegt sind. Die Packmittellagen 31, 32 werden durch das Siegelwerkzeug 1 hindurchgeführt.

**In** Ausgestaltungen werden die Packmittellagen 31, 32 in einem getakteten Vorschub durch das Siegelwerkzeug 1 hindurchgeführt, wobei in Vorschubpausen ein Produkt 2 in einem Bereich innerhalb der Siegelnahtkontur 13 angeordnet ist und der Siegelstempel 10 und der Anpressrahmen 4 der Ambossplatte 11 zum Verbinden der Packmittellagen 31, 32 entlang der Siegelnahtkontur 13 zugestellt werden.

In Ausgestaltungen werden die Packmittellagen 31, 32 kontinuierlich durch das Siegelwerkzeug 1 hindurchgeführt, wobei für ein Versiegeln das Siegelwerkzeug 1 in Bewegungsrichtung der Packmittellagen 31, 32 mit diesen verstellt wird.

Zur Herstellung einer Siegelbeutel-Verpackung für das Produkt 2 wird der Siegelstempel 10 der Ambossplatte 11 in Anpressrichtung zugestellt.

Für ein Versiegeln wird in Ausgestaltungen mindestens eine Packmittellage 31, 32 und/oder eine Beschichtung an einer Packmittellage 31, 32 aufgeschmolzen.

Der Siegelstempel 10 wird der Ambossplatte 11 zum Versiegeln der Packmittellagen 31, 32 mit einem Siegeldruck und einer Siegeldauer zugestellt. Der Siegeldruck, die Siegeldauer und/oder eine Temperatur, auf welche der Siegelstempel 10 aufgeheizt wird, ist/sind dabei je nach Anwendungsfall geeignet wählbar.

Nach Ende des Siegelvorgangs wird der Siegelstempel 10 entgegen der Anpressrichtung weg von der Ambossplatte 11 bewegt. Das Anpresselement 4 wird zeitversetzt zu dem Siegelstempel 10 bewegt und verbleibt beim Anheben des Siegelstempels 10 zunächst in Anlage mit der Packmittellage 31. Das Anpresselement 4 wird insbesondere durch die Krafteinrichtung, beispielsweise die Federelemente 50, belastet, um das Anpresselement 4 in eine Pressposition zu zwingen, in welcher die erste Packmittellage 31 durch das Anpresselement 4 an die zweite Packmittellage 32 gezwungen ist. Ein Zeitversatz wird dabei so gewählt, dass das Anpresselement 4 erst aus der Pressposition bewegt wird, wenn sich ein Siegelmaterial, insbesondere ein Heißsiegellack, an der Siegelnaht 33 verfestigt hat.

In Ausgestaltungen ist der Anpressrahmen 4 gekühlt, sodass ein Verfestigen der Siegelnaht 33 beschleunigt und ein weiterer Wärmeeintrag in das Produkt vermieden werden kann.

Bei einem Zustellen des Siegelstempels 10 in Richtung der Ambossplatte 11 gelangt in Ausgestaltungen zunächst das in Anpressrichtung von dem Siegelstempel 10 abragende Anpresselement 4 in Kontakt mit der Packmittellage 31.

Wie in Fig. 2 erkennbar, weist in dem dargestellten Ausführungsbeispiel die Siegelnahtkontur 13 an einem Ende, insbesondere an einem vorderen Ende, einen nach außen weisenden, V-förmigen Abschnitt auf. Derartig gestaltete Konturen werden auch als Chevron-Konturen bzw. die damit erzeugtem Siegelnähte als Chevron-Nähte bezeichnet. Chevron-Nähte erlauben ein einfaches Öffnen einer durch die Chevron-Naht verschlossenen Verpackung. Die dargestellte Kontur ist jedoch lediglich beispielhaft.

Die Anpresskontur 40 erstreckt sich entlang der Siegelnahtkontur 13. Die Anpresskontur 40 ist in Ausgestaltungen geometrisch ähnlich der Siegelnahtkontur 13 und weist zumindest im Wesentlichen dieselbe Gestalt wie die Siegelnahtkontur 13 auf, ist aber unterschiedlich groß der Siegelnahtkontur 13..

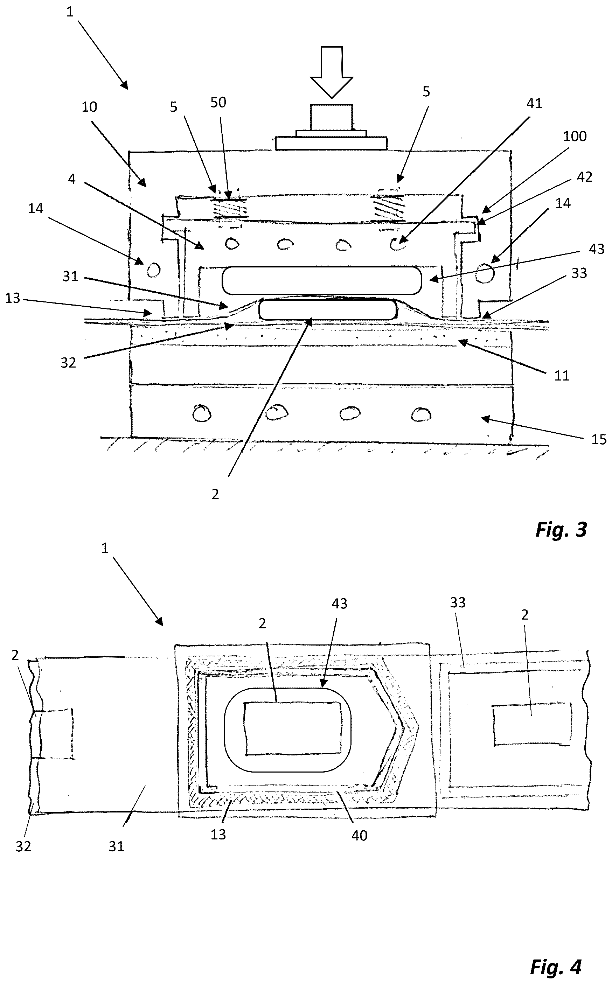

Fig. 3 und 4 zeigen in einer geschnittenen Seitenansicht und einer teilweise geschnittenen Draufsicht ein Ausführungsbeispiel eines Siegelwerkzeugs 1 zur Herstellung einer Siegelbeutel-Verpackung für ein Produkt 2 ähnlich Fig. 1.

In Ausgestaltungen ist an dem Anpresselement 4 ein in Fig. 3 und 4 dargestelltes Druckpolster 43 angeordnet, durch das auf die Packmittellagen 31, 32 und das dazwischen angeordnete Produkt 2 eine Kraft aufbringbar ist, sodass zwischen den Packmittellagen 31, 32 und/oder in dem Produkt 2 vorhandenes Gas, insbesondere Luft, verdrängt wird.

Damit das Anpresselement 4 weder die Packmittellage 31, 32 noch das Produkt 2 beschädigt, wird das Anpresselement 4 wie oben beschrieben in Ausgestaltungen gekühlt. Das Druckpolster ist insbesondere in dem als Anpressrahmen gestalteten Anpresselement 4 aufgenommen und wird mit diesem gekühlt, um eine Beschädigung der Packmittellagen 31, 32 und/oder des Produkts 2 durch das Druckpolster zu vermeiden.

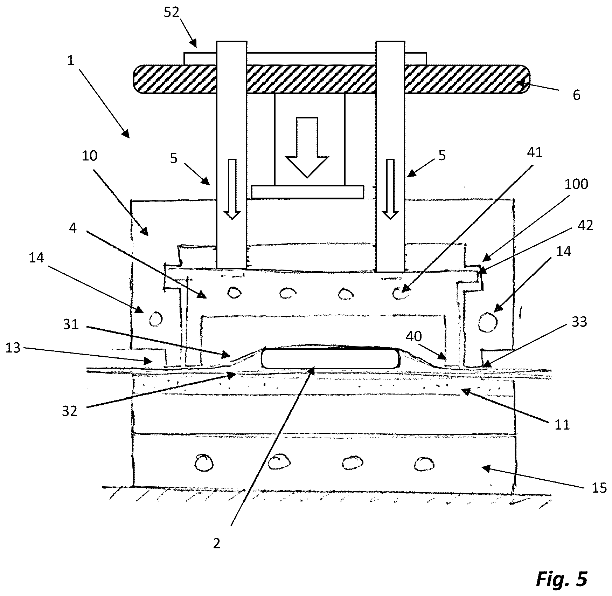

Fig. 5 zeigt schematisch in einer geschnittenen Seitenansicht ein Ausführungsbeispiel eines Siegelwerkzeugs 1 ähnlich Fig. 1. Im Unterschied zu der Gestaltung gemäß Fig. 1 ist bei der Gestaltung gemäß Fig. 5 ein Träger 6 vorgesehen, wobei der Siegelstempel 10 und das Anpresselement 4 jeweils an dem Träger 6 gelagert sind.

Das Anpresselement 4 ist insbesondere relativ zu dem Siegelstempel 10 in der Anpressrichtung verstellbar an dem Träger 6 gelagert, sodass das Anpresselement 4 bei einem Zustellen des Siegelstempels 10 vor der Siegelnahtkontur 13 auf dem zu versiegelnden Element aufsetzt und/oder bei einem Bewegen des Siegelstempels 10 weg von dem zu versiegelnden Element nach der Siegelnahtkontur 13 von dem zu versiegelnden Element abhebt. Beispielsweise ist das Anpresselement 4 über Führungsstangen an dem Träger 6 gelagert. Das Anpresselement 4 ist in Ausgestaltungen wie schematisch in Fig. 5 dargestellt durch einen Stellantrieb 52 relativ zu dem Träger 6 verstellbar. Der Stellantrieb 52 dient dabei auch als aktive Krafteinrichtung, um das Anpresselement 4 in eine erste Position zu zwingen, in welcher ein freies Ende des Antriebselements 4 von der Siegelnahtkontur 13 abragt.

In Ausgestaltungen sind der Siegelstempel 10 und das Anpresselement 4 wie schematisch in Fig. 5 durch Pfeile dargestellt jeweils in Anpressrichtung verstellbar an dem Träger 6 gelagert. Beispielsweise ist ein Stellantrieb 18 vorgesehen, um den Siegelstempel 10 relativ zu dem Träger 6 in Anpressrichtung zu verstellen.

Der Stellantrieb 18 für den Siegelstempel 10 und der Stellantrieb 52 für das Anpresselement 4 sind insbesondere derart betreibbar, dass das Anpresselement 4 bei einem Zustellen des Siegelstempels 10 vor der Siegelnahtkontur 13 auf dem zu versiegelnden Element aufsetzt und/oder bei einem Bewegen des Siegelstempels 10 weg von dem zu versiegelnden Element nach der Siegelnahtkontur 13 von dem zu versiegelnden Element abhebt.

**In** Ausgestaltungen ist der Siegelstempel 10 ortsfest an dem Träger 6 gelagert und mit dem Träger 6 verstellbar. Das Anpresselement 4 ist dabei an dem Träger 6 verstellbar gelagert und insbesondere mittels einer aktiven und/oder einer passiven Krafteinrichtung in eine erste Position zwingbar, in welcher ein freies Ende des Antriebselements 4 von der Siegelnahtkontur 13 abragt.

Die dargestellten Ausführungsbeispiele sind lediglich beispielhaft und es sind zahlreiche Abwandlungen denkbar. Insbesondere können Merkmale oder Elemente, welche im Zusammenhang mit einem Ausführungsbeispiel beschrieben wurden, mit einem anderen Ausführungsbeispiel kombiniert werden, um so weitere Ausführungsbeispiele zu erhalten.

## Patentansprüche

1. Siegelwerkzeug, insbesondere zur Herstellung einer Siegelbeutel-Verpackung für ein Produkt,
wobei das Siegelwerkzeug (1) einen Siegelstempel (10) und ein Anpresselement (4) umfasst,
wobei der Siegelstempel (10) an einem Ende eine Siegelnahtkontur (13) aufweist, und wobei der Siegelstempel (10) in einer Anpressrichtung einem zu versiegelnden Element zustellbar ist,
wobei das Anpresselement mit dem Siegelstempel (10) dem zu versiegelnden Element zustellbar und von dem zu versiegelnden Element weg bewegbar ist,
wobei das Anpresselement (4) als Anpressrahmen mit einer innerhalb der Siegelnahtkontur (13) angeordneten Anpresskontur (40) gestaltet ist,
wobei das Siegelwerkzeug (1) eine Kühleinrichtung zum Kühlen des Anpresselements (4) und ein innerhalb der Siegelnahtkontur (13) und in dem Anpressrahmen angeordnetes Druckpolster (43) umfasst,
wobei das Anpresselement (4) relativ zu dem Siegelstempel (10) in der Anpressrichtung verstellbar gelagert ist, und
wobei auf das Anpresselement (4) eine Kraft wirkt, sodass das Anpresselement (4) eine Hubbewegung ausführt, derart, dass das Anpresselement (4) bei einem Zustellen des Siegelstempels (10) vor der Siegelnahtkontur (13) auf dem zu versiegelnden Element aufsetzt und/oder bei einem Bewegen des Siegelstempels (10) weg von dem zu versiegelnden Element nach der Siegelnahtkontur (13) von dem zu versiegelnden Element abhebt.

2. Siegelwerkzeug nach Anspruch 1, **dadurch gekennzeichnet, dass** die Anpresskontur (40) sich zumindest abschnittsweise entlang der Siegelnahtkontur (13) erstreckt.

3. Siegelwerkzeug nach Anspruch 1 oder 2, **dadurch gekennzeichnet, dass** die Kühleinrichtung als Flüssigkeitskühlung umfassend an den Anpresselement vorgesehene Kühlkanäle (41) gestaltet ist und/oder die Kühleinrichtung Peltier-Elemente umfasst.

4. Siegelwerkzeug nach einem der vorangegangenen Ansprüche, **dadurch gekennzeichnet, dass**
das Siegelwerkzeug (1) eine auf das Anpresselement (4) einwirkende Krafteinrichtung umfasst.

5. Siegelwerkzeug nach Anspruch 4, **dadurch gekennzeichnet, dass**
die Krafteinrichtung eine passive Krafteinrichtung ist, die insbesondere als mindestens ein mit zwischen dem Siegelwerkzeug und dem Anpresselement (4) angeordnetes, insbesondere mit dem Siegelwerkzeug (10) verbundenes Federelement ausgebildet ist.

6. Siegelwerkzeug nach Anspruch 4 oder 5, **dadurch gekennzeichnet, dass**
die Krafteinrichtung eine aktive Krafteinrichtung ist, die insbesondere als hydraulischer, pneumatischer, elektromagnetischer oder als linear wirkender elektrischer Antrieb ausgebildet ist, um die Hubbewegung des Anpresselements (4) zu bewirken.

7. Siegelwerkzeug nach einem der vorangegangenen Ansprüche, **dadurch gekennzeichnet, dass**
das Druckpolster als flexibler und/oder kompressibler Einsatz gestaltet ist.

8. Siegelwerkzeug nach einem der vorangegangenen Ansprüche, **dadurch gekennzeichnet, dass**
das Anpresselement (4) an dem Siegelstempel (10) oder an einem Träger (6) in Anpressrichtung verstellbar gelagert ist.

9. Siegelwerkzeug nach einem der vorangegangenen Ansprüche, **dadurch gekennzeichnet, dass**
das Siegelwerkzeug ein Gegenelement, insbesondere eine Ambossplatte (11) und/oder einen zweiten Siegelstempel, umfasst.

10. Verpackungsmaschine zur Herstellung einer Siegelbeutel-Verpackung für ein darin zu verpackendes Produkt, wobei die Siegelbeutel-Verpackung eine erste Packmittellage (31) und eine zweite Packmittellage (32) umfasst, wobei die Verpackungsmaschine eingerichtet ist, um das Produkt (2) zwischen den zwei Packmittellagen einzubringen, **dadurch gekennzeichnet, dass** die Verpackungsmaschine ein Siegelwerkzeug (1) nach einem der Ansprüche 1 bis 9 umfasst, um die Packmittellagen (31, 32) entlang einer Siegelnaht (33) miteinander zu versiegeln.

11. Verfahren zur Herstellung einer Siegelbeutel-Verpackung umfassend eine erste Packmittellage (31) und eine zweite Packmittellage (32) für ein zu verpackendes Produkt, wobei das Produkt (2) zwischen den zwei Packmittellagen (31, 32) eingebracht wird und die Packmittellagen (31, 32) entlang einer Siegelnaht (33) miteinander versiegelt werden, wobei ein Siegelstempel (10) in einer Anpressrichtung den Packmittellagen (31, 32) zugestellt wird, sodass eine Siegelnahtkontur (13) des Siegelstempels (1) auf der dem Siegelstempel zugewandten ersten Packmittellage (31) aufsetzt,
wobei ein Anpresselement (4) mit dem Siegelstempel (10) den Packmittellagen (31, 32) zugestellt wird und auf der dem Siegelstempel zugewandten ersten Packmittellage (31) aufsetzt,
wobei das Anpresselement (4) zumindest teilweise zeitversetzt zu dem Siegelstempel bewegt wird, sodass bei einem Zustellen des Siegelstempels (10) das Anpresselement vor der Siegelnahtkontur (13) auf der ersten Packmittellage (31) aufsetzt und/oder bei einem Bewegen des Siegelstempels (10) weg von den Packmittellagen (31, 32) das Anpresselement nach der Siegelnahtkontur (13) von der ersten Packmittellage (31, 32) abhebt,
wobei das Anpresselement (4) gekühlt wird, um ein Erhitzen der Packmittellagen durch das Anpresselement zu vermeiden, und
wobei das Produkt (2) beim und/oder vor einem Versiegeln der Packmittellagen (31, 32) entlang der Siegelnaht (33) durch ein innerhalb der Siegelnahtkontur (13) angeordnetes Druckpolster (43) komprimiert wird.

12. Verfahren nach Anspruch 11, **dadurch gekennzeichnet, dass** das Anpresselement (4) bei einem Abheben der Siegelnahtkontur (13) für eine Anpressdauer und/oder bis Erreichen eines maximalen Verstellwegs zwischen dem Siegelstempel (10) und dem Anpresselement (4) an die erste Packmittellage (31) gezwungen wird, insbesondere durch eine Krafteinrichtung.

13. Verfahren nach Anspruch 11 oder 12, **dadurch gekennzeichnet, dass** eine Komprimierung des Produkts durch das Druckpolster beginnt, bevor die Siegelnahtkontur auf der ersten Packmittellage aufsetzt.
